# EUROPEAN PATENT SPECIFICATION

(11) **EP 3 081 400 B1**
(45) Date of publication and mention of the grant of the patent: **15.04.2020**
(21) Application number: 14875074.8
(22) Date of filing: 11.12.2014
(51) Int. Cl.: B60C 11/16, B60C 11/03, B60C 11/12, B60C 11/13, B60C 11/11

(54) **TIRE FOR WINTER**
WINTERREIFEN
PNEU D'HIVER

(30) Priority: 27.12.2013 JP 2013271790
(43) Date of publication of application: 19.10.2016
(73) Proprietor: Sumitomo Rubber Industries, Ltd., Kobe-shi, Hyogo 651-0072 (JP)
(72) Inventor: KAGEYAMA Naoki, Kobe-shi Hyogo 651-0072 (JP)
(74) Representative: Manitz Finsterwald Patent- und Rechtsanwaltspartnerschaft mbB
(86) International application number: PCT/JP2014/082851
(87) International publication number: WO 2015/098547

(56) References cited:
- EP-A1- 2 243 638
- EP-A1- 2 402 178
- EP-A1- 2 578 418
- EP-A2- 2 586 628
- WO-A1-2010/098092

## Description

### Technical Field

The present invention relates to a tire for winter having an excellent on-ice performance.

### Background Art

The following Patent Document 1 has proposed a tire for winter including a tread portion provided with blocks with a stud pin. As the stud pin chips into icy road surface during traveling on ice, the tire for winter may exert an excellent on-ice performance.

In order to prevent removal of the stud pin, the blocks of the tread portion are formed of a rubber having a relatively hard hardness. Furthermore, in general, blocks having a hole for installing a stud pin have a substantially rectangular ground contact surface in order to suppress deformation of the block at the time of traveling. When a stud pin is press-fitted into the hole, the rigidity around the hole of the block further improves.

Such a block for winter tire tends to deform less at the time of grounding, and thus an edge of the block cannot be in contact with the ground sufficiently. Accordingly, edge effect may be reduced. Furthermore, on ice traveling, frictional force tends to decrease suddenly at when the tire starts to slip, and thus steering stability on ice may be deteriorated.
Patent Document 1: Japanese Unexamined Patent Application Publication No. 2010-149599

A pneumatic winter tire according to the preamble of claim 1 is known from document EP 2 402 178 A1. Moreover, document EP 2 578 418 A1 discloses a studless pneumatic winter tire having an asymmetric tread pattern provided with a plurality of blocks. Furthermore, document EP 2 586 628 A2 discloses a pneumatic tire with a tread portion provided with a plurality of triangular blocks.

### Summary of Invention

### Technical Problem

The present invention has been made in view of circumstances described above, and has a major object to provide a tire for winter that exhibits an excellent on-ice performance.

### Solution to Problem

The present invention provides a tire for winter including a tread portion being provided with a stud pin or a hole for a stud pin, the tread portion being separated into a plurality of blocks including triangular blocks having a substantially triangular ground contact surface, the ground contact surface of the triangular block including a first vertex having a smallest interior angle and a first edge facing the first vertex, and the center of the stud pin or the hole being located on the side of the first edge of the triangular block.

In the tire for winter according to the invention, it is preferable that the ground contact surface of the triangular block includes a main portion defined between the first edge and an imaginary middle line that extends in parallel with the first edge and that divides a length between the first edge and the first vertex in a direction perpendicular to the first edge into equal parts and a tapered portion between the imaginary middle line and the first vertex, and the center of the stud pin or the hole is located on the main portion.

In the tire for winter according to the invention, it is preferable that the triangular block is provided on a tire equator.

In the tire for winter according to the invention, it is preferable that the interior angle of the first vertex is of from 20 to 40 degrees.

In the tire for winter according to the invention, it is preferable that the tread portion is provided with a groove adjacent to the first edge, and the groove is provided with a tie-bar in which a groove bottom raises.

In the tire for winter according to the invention, it is preferable that the tapered portion is provided with a sipe.

In the tire for winter according to the invention, it is preferable that the ground contact surface of the triangular block includes a second vertex having a greatest interior angle, and the interior angle of the second vertex is an obtuse angle.

### Advantageous Effects of Invention

The tire for winter according to the present invention includes a tread portion provided with a stud pin or a hole for a stud pin. The stud pin can scratch or chip into ice surfaces to offer an excellent on-ice performance.

The tread portion is separated into a plurality of blocks including a triangular block having a substantially triangular ground contact surface. The ground contact surface of the triangular block includes a first vertex having a smallest interior angle and a first edge facing the first vertex. The center of the stud pin or the hole is located on the side of the first edge of the triangular block.

When a stud pin is press-fitted into the hole, the rigidity around the first edge of the triangular block improves. Thus, the stud pin and the triangular block securely chip into the road surface on-ice traveling, and thus on-ice performance can be improved. Meanwhile, since a portion around the first vertex apart from the stud pin can maintain its flexibility, it can follow the road surface. Thus, the edge around the first vertex can exert an excellent edge effect. Accordingly, both of edge effect and spike effect can be obtained in good balance. Furthermore, reduction of frictional force at when the tire starts to slip on driving on ice may be gentle to improve steering stability on ice.

As described above, the tire for winter according to the present invention can exhibit an excellent on-ice performance.

### Brief Description of Drawings

FIG. 1 is a development view of a tread portion of a pneumatic tire according to the present embodiment.
FIG. 2 is a cross-sectional view of FIG. 1 taken along a line A-A.
FIG. 3 is an enlarged view of a triangular block of FIG. 1.
FIG. 4 is a cross-sectional view of a first vertex of FIG. 3 taken along a line B-B.
FIG. 5 is a cross-sectional view of a groove adjacent to a first edge in FIG. 3 taken long a line C-C.
FIG. 6 is an enlarged perspective view of a cross-section of a sipe.

### Reference Signs List

- 2: Tread portion
- 8: Hole
- 20: Block
- 30: Triangular block
- 31: First vertex
- 41: First edge

### Description of Embodiments

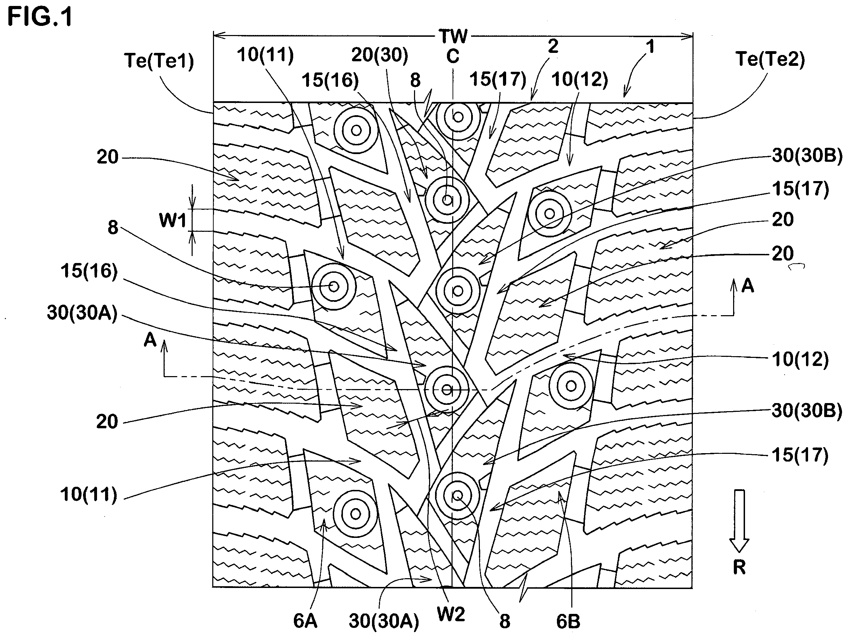

Hereinafter, an embodiment of the present invention will be described with reference to the accompanying drawings. FIG. 1 illustrates a tread portion 2 of a tire 1 for winter according to the present embodiment (hereinafter, referred to as "tire"). The tire is used with a stud pin that is provided on the tread portion 2. In FIG. 1, the stud pin is omitted. The tire 1 according to the present embodiment, for example, is suitably used as a winter tire for passenger cars.

As illustrated in FIG. 1, the tire 1 according to the present invention includes a tread portion 2 provided with a directional tread pattern having a designated rotational direction R. The rotational direction R is displayed on a sidewall using a character or mark, for example.

As the directional pattern, the tread portion 2 is provided with a plurality of inclined main grooves 10 and a plurality of longitudinal grooves 15.

The inclined main grooves 10, for example, extend from tread edges Te toward the tire equator C with an inclination, and terminate beyond the tire equator C. In this embodiment, the inclined main grooves 10 extend in an arc shape, for example.

The tread edges Te are defined as axially outermost edges of the ground contacting patch which occurs under a standard condition of the tire 1 with a standard tire load when the camber angle of the tire is zero. The standard condition is such that the tire is mounted on a standard rim with a standard pressure but is loaded with no tire load. Unless otherwise noted, dimensions of respective portions of the tire are values measured under the standard condition.

The standard wheel rim is a wheel rim approved for each tire by standards organizations on which the tire is based, wherein the standard wheel rim is the "standard rim" specified in JATMA, the "Design Rim" in TRA, and the "Measuring Rim" in ETRTO, for example.

The standard pressure is a standard pressure approved for each tire by standards organizations on which the tire is based, wherein the standard pressure is the "maximum air pressure" in JATMA, the maximum pressure given in the "Tire Load Limits at Various Cold Inflation Pressures" table in TRA, and the "Inflation Pressure" in ETRTO, for example.

The standard tire load is a tire load approved for each tire by standards organizations in which the tire is based, wherein the standard tire load is the "maximum load capacity" in JATMA, the maximum value given in the above-mentioned table in TRA, the "Load Capacity" in ETRTO, for example.

The inclined main grooves 10, for example, include first inclined main grooves 11 and second inclined main grooves 12. The first inclined main grooves 11 and the second inclined main grooves 12 are arranged alternately in the circumferential direction of the tire. The first inclined main grooves 11 extend from a first tread edge Tel, which is one of the tread edges, toward the tire equator C, and terminate in communication with second inclined main grooves 12. The second inclined main grooves 12 extend from a second tread edge Te2, which is the other one of tread edges, toward the tire equator C, and terminate in communication with first inclined main grooves 11.

The longitudinal grooves 15, for example, extend in the circumferential direction of the tire with an inclination direction same as the inclined main grooves 10. Each longitudinal groove 15 connects a pair of circumferentially adjacent inclined main grooves 10 and 10.

The longitudinal grooves 15, for example, include inner first longitudinal grooves 16 and inner second longitudinal grooves 17 arranged on both sides of the tire equator. The inner first longitudinal grooves 16 are arranged on a first land portion 6A between the tire equator C and the first tread edge Tel. The inner second longitudinal grooves 17 are arranged on a second land portion 6B between the tire equator C and the second tread edge Te2.

A groove width W1 of the inclined main grooves 10 and a groove width W2 of the longitudinal grooves 15 are preferably set in a range of from 3.0% to 8.5% of a tread width TW. Thus, the tire can compress snow by the grooves effectively to generate large snow-shearing force when traveling on snow. The tread width TW is an axial distance between the first tread edge Tel and the second tread edge Te2 under the standard condition.

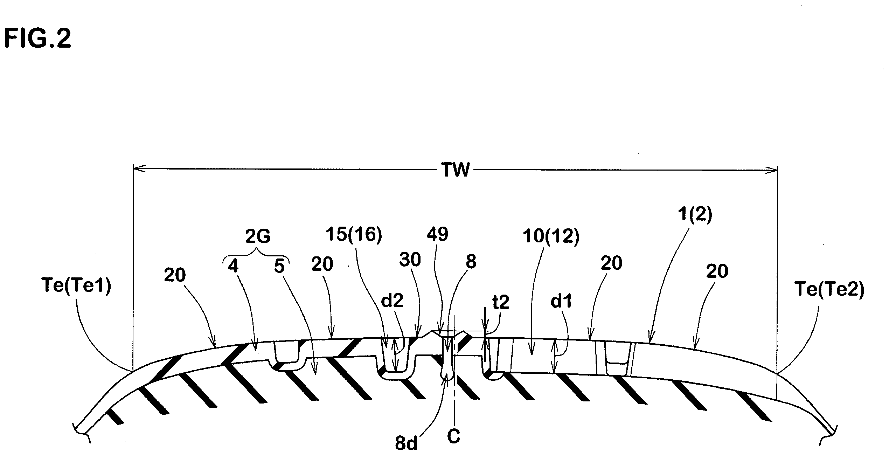

FIG. 2 illustrates a cross-sectional view of FIG. 1 taken along a line A-A of FIG. 1. As illustrated in FIG. 2, a groove depth d1 of the inclined main grooves 10 and a groove depth d2 of the longitudinal grooves 15, for example, are preferably set in a range of from 3.0 to 10.0 mm.

As illustrated in FIG. 1, the tread portion 2 is separated into a plurality of blocks 20 by the above grooves. The blocks 20 include a triangular block 30 having a substantially triangular ground contact surface. In this description, a substantially triangular shape includes one that each side of triangular block 30 is not straight (e.g., a curve line). Furthermore, a substantially triangular shape includes one that one of vertexes of the triangular block 30 is rounded.

In this embodiment, the triangular block 30, for example, includes first triangular blocks 30A and second triangular blocks 30B.

Each of the first triangular blocks 30A is defined by one of the first inclined main grooves 11, one of the second inclined main grooves 12 and one of the inner first longitudinal grooves 16. Each of the second triangular blocks 30B is defined by one of the first inclined main grooves 11, one of the second inclined main grooves 12 and one of the inner second longitudinal grooves 17. The first triangular block 30A and the second triangular blocks 30B are alternately arranged in the circumferential direction of the tire.

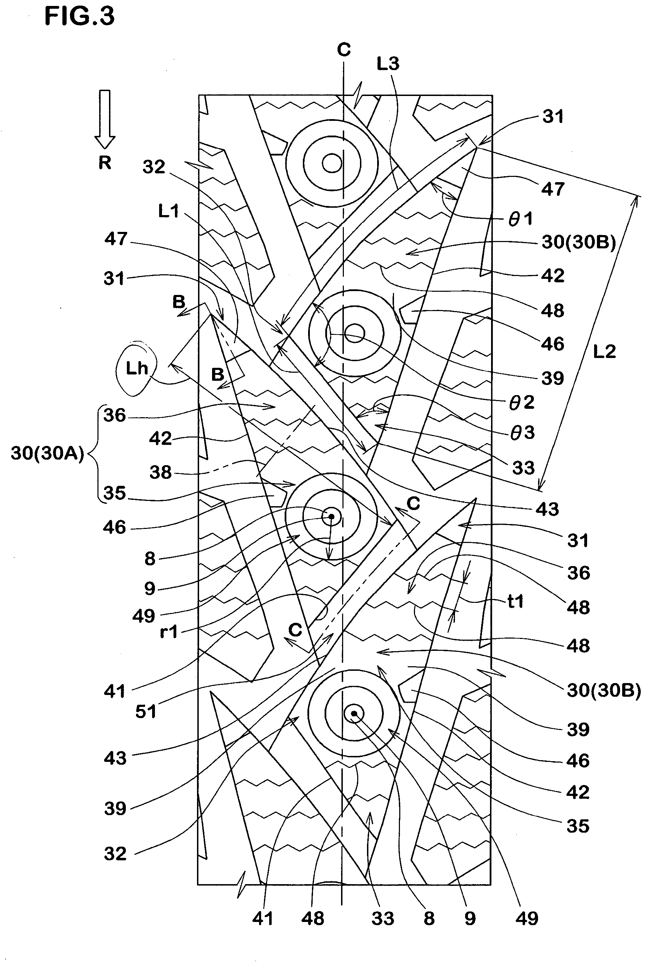

FIG. 3 illustrates an enlarged view of triangular blocks 30. As illustrated in FIG. 3, the ground contact surface 39 of each triangular block 30 includes a first vertex 31, a second vertex 32 and a third vertex 33.

The first vertex 31 has the smallest interior angle θ1. For example, the interior angle θ1 of the first vertex 31 is an acute angle of less than 60 degrees. The second vertex 32 has the greatest interior angle θ2. The third vertex 33 has an interior angle θ3 greater than the interior angle θ1 of the first vertex 31 and smaller than the interior angle θ2 of the second vertex 32. In this embodiment, the ground contact surface 39 of each triangular block 30 is formed as a substantially scalene triangle having sides different from one another.

The ground contact surface 39 of each triangular block 30 includes a first edge 41, a second edge 42 and a third edge 43.

The first edge 41 faces the first vertex 31. The second edge 42 faces the second vertex 32. The third edge 43 faces the third vertex 33.

The ground contact surface 39 of each triangular block 30 includes a main portion 35 and a tapered portion 36.

The main portion 35 is a portion defined between the first edge 41 and an imaginary middle line 38. The tapered portion 36 is a portion defined between the imaginary middle line 38 and the first vertex 31. The imaginary middle line 38 extends in parallel with the first edge 41 and divides a length Lh between the first edge 41 and the first vertex 31 into equal parts. The length Lh is a length measured perpendicular to the first edge 41.

One of the triangular blocks 30 is provided with a hole 8 for a stud pin. The center 9 of the hole 8 is located on the side of the first edge 41 of the triangular block 30. In this embodiment, as a preferred embodiment, the center 9 of the hole 8 is located on the main portion 35.

When a stud pin is press-fitted into the hole 8, the rigidity of the main portion 35 of the triangular block improves. Thus, the stud pin and the triangular block 30 securely chip into the road surface on-ice traveling, and thus on-ice performance can be improved. Meanwhile, since a portion around the first vertex 31 apart from the stud pin can maintain its flexibility, it can follow the road surface. Thus, an edge of the tapered portion 36 can exert an excellent edge effect. Accordingly, both of edge effect and spike effect can be obtained in good balance. Furthermore, reduction of frictional force at when the tire starts to slip on driving on ice may be gentle to improve steering stability on ice.

In order to further improve the above effects, the triangular block 30 is preferably arranged on the tire equator C. Thus, large ground contact pressure acts on the triangular block 30, and thus an excellent on-ice performance can be achieved.

Preferably, the first vertex 31, for example, protrudes toward an opposite direction to the rotational direction R of the tire 1. Thus, the main portion 35 of the triangular block 30 comes into contact with the ground before the tapered portion 36. This would prevent damage occurring from the tapered portion 36.

The interior angle θ1 of the first vertex 31 is preferably not less than 20 degrees, more preferably not less than 25 degrees, and preferably not more than 40 degrees, more preferably not more than 35 degrees. The first vertex 31 can exert an excellent edge effect while preventing damage occurring from the tapered portion 36.

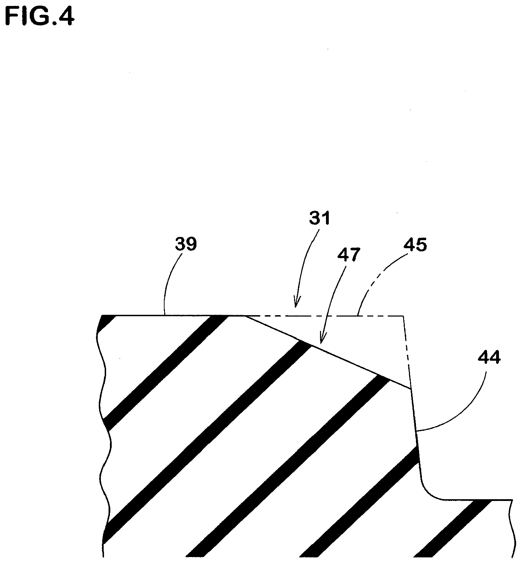

FIG. 4 illustrates a cross-sectional view of the first vertex of FIG. 3 taken along a line B-B. As illustrated in FIG. 4, the first vertex 31 is preferably provided with a chamfered portion 47 on a corner portion 45 formed between the ground contact surface 39 and a block sidewall 44, wherein the chamfered portion 47 is such that the corner portion 45 is obliquely removed. The chamfered portion 47 may prevent damage occurring from the tapered portion 36.

As illustrated in FIG. 3, the second vertex 32, for example, protrudes axially outwardly with respect to the tire equator C. The second vertex 32 may improve axial rigidity of the triangular block 30, and thus steering stability of the tire can be improved.

The interior angle θ2 of the second vertex 32 is preferably an obtuse angle. The interior angle θ2 of the second vertex 32 is preferably not less than 105 degrees, more preferably not less than 110 degrees, and preferably not more than 120 degrees, more preferably not more than 115 degrees. This would improve axial rigidity of the triangular block 30.

Preferably, the third vertex 33 protrudes toward the rotational direction R of the tire. With this, the main portion 35 can come into contact with the ground before the tapered portion 36. Accordingly, the main portion 35 and the stud pin can firmly chip into the road surface, and thus an excellent on-ice performance can be offered.

The interior angle θ3 of the third vertex 33 is preferably not less than 40 degrees, more preferably not less than 45 degrees, and preferably not more than 60 degrees, more preferably not more than 55 degrees. The third vertex 33 can prevent damage occurring from the main portion 35, and the block can chip into the road surface to improve on-ice performance.

The first edge 41, for example, extends in a straight shape. The length L1 of the first edge 41 is preferably in a range of not less than 0.45 times more preferably not less than 0.50 times, and preferably not more than 0.65 times, more preferably not more than 0.60 times of the length Lh from the first edge 41 to the first vertex 31. Due to the first edge 41, rigidity of the main portion 35 can be maintained with an excellent edge effect.

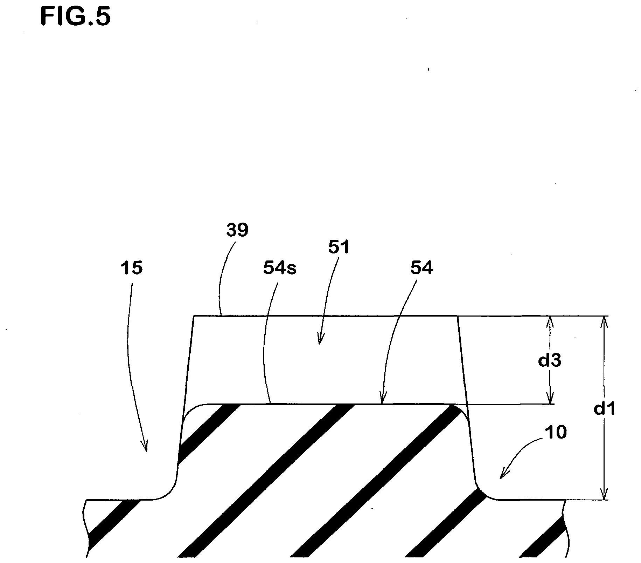

FIG. 5 illustrates a cross-sectional view of a groove 51 adjacent to one of first edges 41 in FIG. 3 taken long a line C-C. As illustrated in FIG. 5, the groove 51 adjacent to one of first edges 41 is preferably provided with a tie-bar 54 in which a groove bottom raises. The tie-bar 54 may enhance rigidity between circumferentially adjacent triangular blocks 30 and 30 to improve steering stability on ice. A tie-bar depth d3 from the ground contact surface 39 to an outer surface 54s of the tie-bar 54 is preferably not less than 0.4 times, more preferably not less than 0.45 times, and preferably not more than 0.6 times, more preferably not more than 0.55 times of the groove depth d1 of the inclined main grooves 10.

As illustrated in FIG. 3, the second edge 42, for example, extends in the circumferential direction of the tire in a straight shape or an arc shape. A length L2 of the second edge 42 is preferably not less than 2.2 times, more preferably not less than 2.3 times, and preferably not more than 2.5 times, more preferably not more than 2.4 times of the length L1 of the first edge 41. The second edge 42 may offer an excellent edge effect to the axial direction of the tire.

Preferably, the second edge 42, for example, is provided with a recess 46 extending toward a centroid of the ground contact surface 39 of the triangular block 30. The recess 46 according to the embodiment, for example, is provided in the vicinity of the middle of the second edge 42. The recess 46 promotes the flexibility of the tapered portion 36, and thus an excellent edge effect can be offered.

The third edge 43, for example, extends across the tire equator C with an inclination with respect to the circumferential direction of the tire. The third edge 43, for example, is configured as a straight shape or a smooth arc shape. The length L3 of the third edge 43 is preferably not less than 1.8 times, more preferably not less than 1.9 times, and preferably not more than 2.1 times, more preferably not more than 2.0 times of the length L1 of the first edge 41. The third edge 43 may exert edge effect in both of circumferential and axial directions in good balance.

Preferably, the tapered portion 36 is provided with a plurality of zigzag sipes 48. A space t1 between adjacent sipes 48 and 48 is preferably set in a range of from 3.5 to 4.8 mm, for example. The sipes 48 may further improve edge effect of the tapered portion 36.

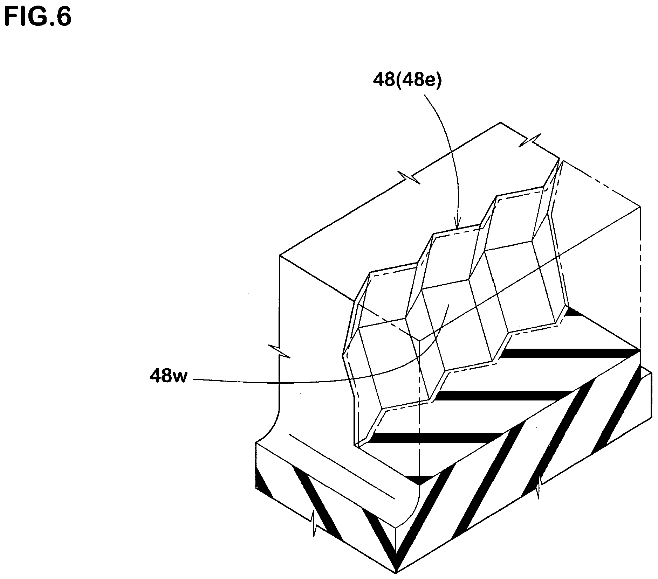

FIG. 6 illustrates an enlarged perspective view of a cross-section of one of the sipes 48 of FIG. 3. As illustrated in FIG. 6, the sipe 48 is preferably configured as so-called "Miura-ori" structure. The sipe 48 with the Miura-ori structure includes a zigzag opening 48e. Furthermore, the Miura-ori structured sipe 48 extends in a depth direction while oscillating in a longitudinal direction of the sipe and keeping its zigzag shape. Such a sipe 48 can enhance the rigidity of the block by being engaged uneven sipe walls 48w with each other, and thus steering stability can be improved.

As illustrated in FIG. 3, at least one sipe 48 may be provided on the main portion 35. In this embodiment, a plurality of sipes are provided between the hole 8 and the third vertex 33.

An annular region 49 for fixing a stud pin is preferably provided around the hole 8, wherein the region 49 is not provided with any sipes. Preferably, the region 49 has a diameter r1 in a range of from 5 to 10 mm from the center 9 of the hole 8, for example. The region 49 can improve holding force of the hole 8 for a stud pin (hereinafter, referred as "pin-holding property") effectively.

As illustrated in FIG. 2, the region 49 preferably is raised in a height of from 0.5 to 2.0 mm from the ground contact surface. Such a region 49 can prevent damage from occurring around the hole 8 effectively.

As illustrated in FIG. 1, as for the tire for winter, the land ratio Lr of the tread portion 2 is preferably in a range of not less than 55%, more preferably not less than 60%, and preferably not more than 75%, more preferably not more than 70%. Thus, large snow-shearing force can be obtained while maintaining sufficient rigidity of the tread portion 2. In this description, the land ratio is defined as the ratio Sb /Sa of a net total ground contact area Sb to an imaginary total ground contact area Sa obtained by being filled up all the grooves and sipes between the tread edges Te and Te.

As illustrated in FIG. 2, a tread rubber 2G, for example, is configured as a double-layer structure including a cap rubber layer 4 exposed at the outer surface and a base rubber layer 5 disposed inside the cap rubber layer 4. The cap rubber layer 4 is preferably made of rubber having JIS-A hardness smaller than that of the base rubber layer 5. Such a cap rubber layer 4 may improve edge effect of each block. The base rubber layer 5 can maintain sufficient rigidity of the tread portion 2 to improve steering stability. The term JIS-A hardness herein refers to a durometer type-A hardness of rubber measured at 23 degrees C. environments in compliance with JIS-K6253.

The JIS-A hardness Hc of the cap rubber layer 4 is preferably in a range of not less than 46 degrees, more preferably not less than 50 degrees, and preferably not more than 58 degrees, more preferably not more than 54 degrees. Such a cap rubber layer 4 would suppress uneven wear of the tread portion 2 while improving edge effect.

The JIS-A hardness Hb of the base rubber layer 5 is preferably in a range of not less than 58 degrees, more preferably not less than 62 degrees, and preferably not more than 68 degrees, more preferably not more than 64 degrees. Such a base rubber layer 5 would increase rigidity of the tread portion 2 while preventing a separation from the cap rubber layer 4.

Preferably, a bottom portion 8d of the hole 8 for a stud pin is located in the base rubber layer 5. This configuration would improve the pin-holding property when the stud pin is inserted in the hole 8 since the flange of the stud pin is held by the base rubber layer 5 made of a hard rubber composition.

While the particularly preferable embodiments in accordance with the present invention have been described in detail, the present invention is limited by the claims.

### Example

Winter tires for passenger cars 205/60R16 having a basic tread pattern illustrated in FIG. 1 were manufactured based on the detail shown in Table 1. As for a tire of Ref. 1, a winter tire with stud pins that are installed on only blocks having a substantially rectangular ground contact surface was also manufactured. Then, on-ice performance, steering stability on ice and pin-holding property of each test tire were tested. The common specification and the test method are as follows.
Rim: 16x6.5
Tire inner pressure: Front 240 kPa, Rear 220 kPa
Test vehicle: Front wheel drive car with displacement of 2,000 cc
Tire installing location: All the wheels

### Grip performance on ice:

Grip performance on ice of the test vehicle with test tires was evaluated by the driver's feeling. The results are indicated in Table 1 using a score based on the result of Ref. 1 being 100. The larger the value, the better the grip performance on ice is.

### Steering stability on ice:

Steering stability on ice of the test vehicle with test tires was evaluated by the driver's feeling. The results are indicated in Table 1 using a score based on the result of Ref. 1 being 100. The larger the value, the better the steering stability on ice is.

### Pin-holding property:

After the test vehicle traveled a certain distance, the number of stud pins that were remained on blocks was counted. The results are indicated in Table 1 using an index based on the result of Ref. 1 being 100. The larger the value, the better the performance is.

The test results are shown in Table 1.

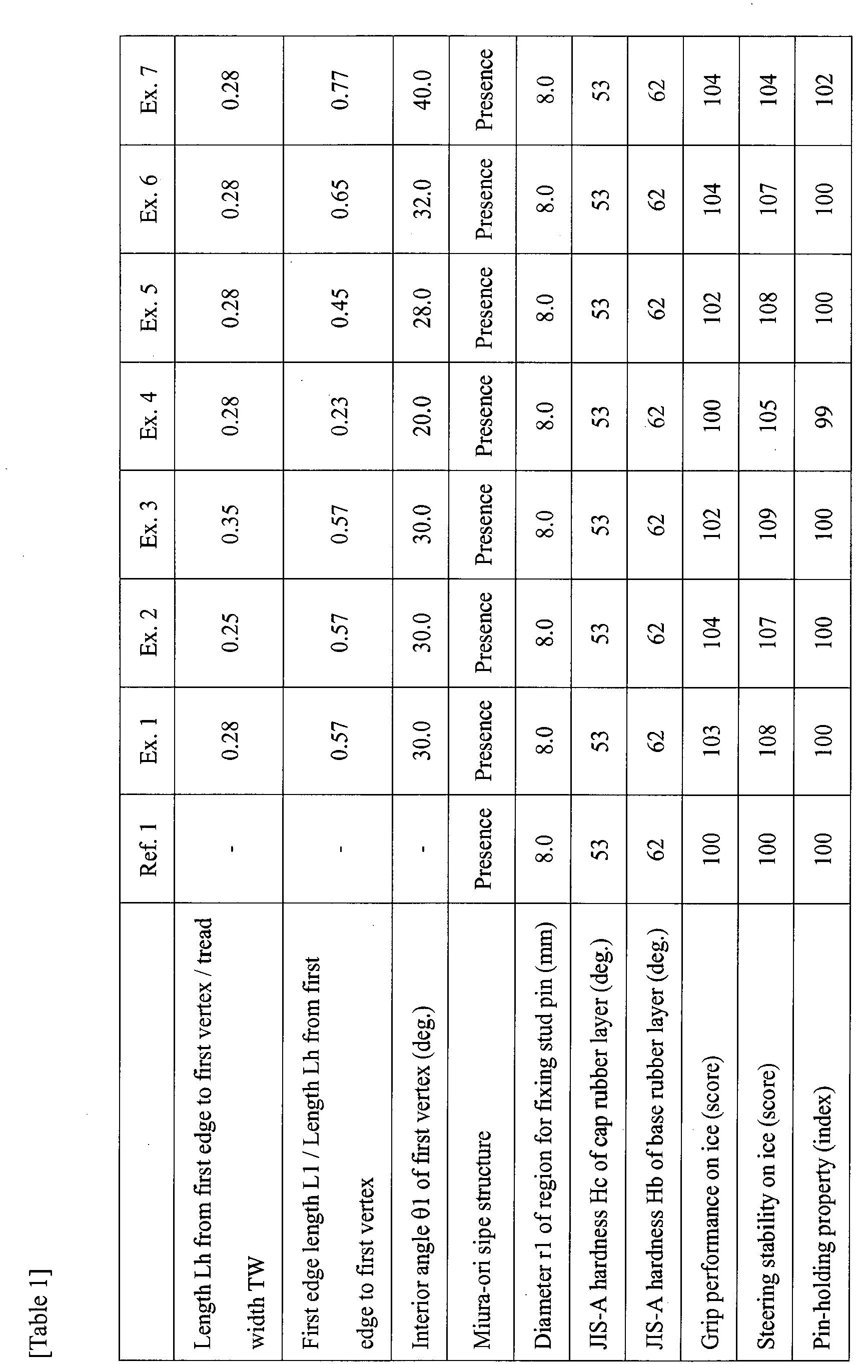

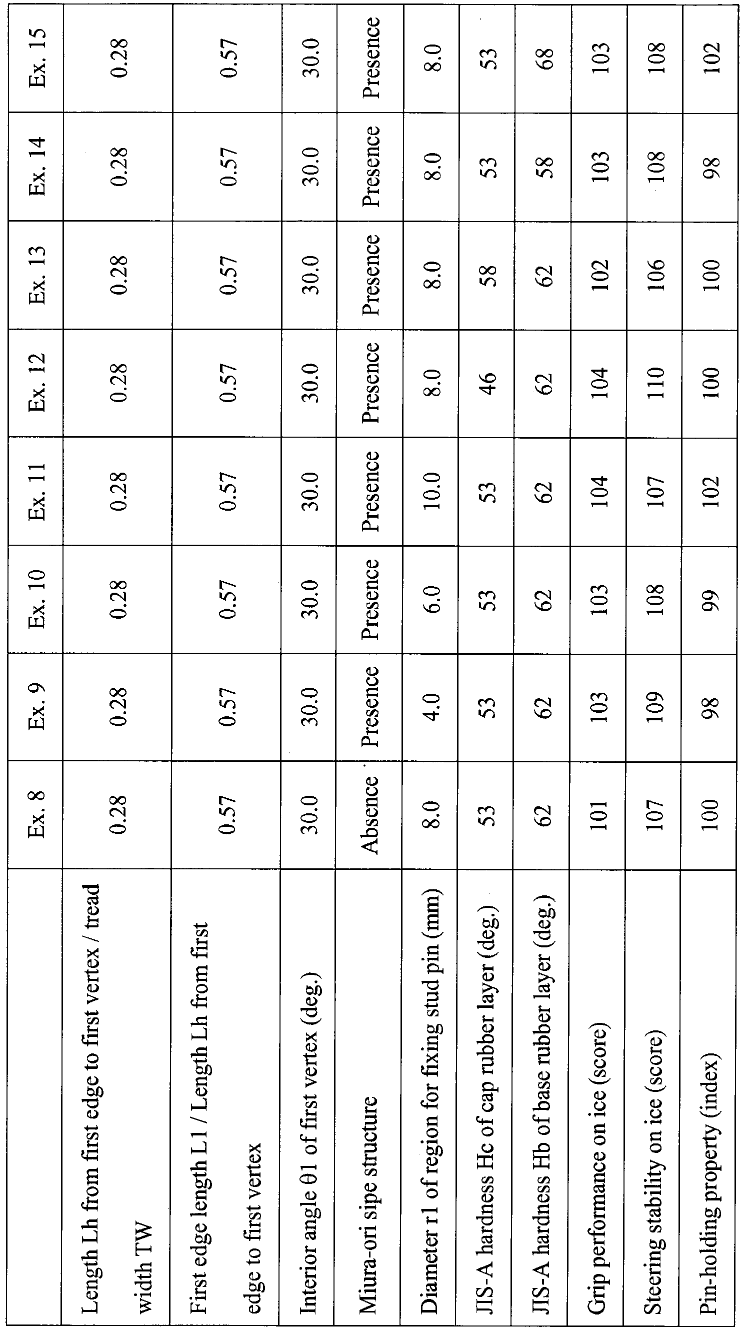

From the test results, it is confirmed that the winter tires according to the embodiment exert an excellent on-ice performance.

## Claims

1. A tire (1) for winter comprising:
a tread portion (2) being provided with stud pins or holes (8) for a stud pin, the tread portion (2) being separated into a plurality of blocks (20) **characterized in that**
the plurality of blocks (20) comprise triangular blocks (30) having a substantially triangular ground contact surface (39);
the ground contact surface (39) of the triangular blocks (30) comprising a first vertex (31) having a smallest interior angle (θ1) and a first edge (41) facing the first vertex (31); and
the center (9) of the stud pins or the holes (8) being located on the side of the first edge (41) of the triangular blocks (30).

2. The tire (1) for winter according to claim 1,
wherein the ground contact surfaces (39) of the triangular blocks (30) comprise
a main portion (35) defined between the first edge (41) and an imaginary middle line (38) that extends in parallel with the first edge (41) and that divides a length (Lh) between the first edge (41) and the first vertex (31) into equal parts, wherein the length (Lh) is measured in a direction perpendicular to the first edge (41), and
a tapered portion (36) between the imaginary middle line (38) and the first vertex (31), and
the center (9) of the stud pins or the holes (8) are located on the main portion (35).

3. The tire (1) for winter according to claim 1 or 2,
wherein the triangular blocks (30) are provided on a tire equator (C).

4. The tire (1) for winter according to any one of claims 1 to 3,
wherein the interior angle (θ1) of the first vertex (31) is of from 20 to 40 degrees.

5. The tire (1) for winter according to any one of claims 1 to 4,
wherein the tread portion (2) is provided with grooves (51) adjacent to the first edge (41), and the grooves (51) are provided with a tie-bar (54) in which a groove (51) bottom raises.

6. The tire (1) for winter according to claim 2,
wherein the tapered portions (36) are provided with a sipe (48).

7. The tire (1) for winter according to any one of claims 1 to 6,
wherein the ground contact surfaces (39) of the triangular blocks (30) comprise a second vertex (32) having a greatest interior angle (θ2), and the interior angle (θ2) of the second vertex (32) is an obtuse angle.

## Patentansprüche

1. Reifen (1) für den Winter, umfassend:
ein Laufflächenabschnitt (2), der mit Spikestiften oder Löchern (8) für einen Spikestift versehen ist, wobei der Laufflächenabschnitt (2) in eine Vielzahl von Blöcken (20) unterteilt ist,
**dadurch gekennzeichnet, dass**
die Vielzahl von Blöcken (20) dreieckige Blöcke (30) mit einer im Wesentlichen dreieckigen Bodenkontaktfläche (39) umfasst;
wobei die Bodenkontaktfläche (39) der dreieckigen Blöcke (30) einen ersten Scheitel (31) mit einem kleinsten Innenwinkel (θ1) und eine erste Kante (41), die dem ersten Scheitel (31) zugewandt ist, aufweist; und
wobei die Mitte (9) der Spikestifte oder der Löcher (8) auf der Seite der ersten Kante (41) der dreieckigen Blöcke (30) angeordnet ist.

2. Reifen (1) nach Anspruch 1,
wobei die Bodenkontaktflächen (39) der dreieckigen Blöcke (30)
einen Hauptabschnitt (35), der zwischen der ersten Kante (41) und einer imaginären Mittellinie (38) definiert ist, die sich parallel zu der ersten Kante (41) erstreckt und die eine Länge (Lh) zwischen der ersten Kante (41) und dem ersten Scheitel (31) in gleiche Teile teilt, wobei die Länge (Lh) in einer Richtung senkrecht zu der ersten Kante (41) gemessen wird, und
einen verjüngten Abschnitt (36) zwischen der imaginären Mittellinie (38) und dem ersten Scheitelpunkt (31) umfassen, und
die Mitte (9) der Spikestifte oder der Löcher (8) sich auf dem Hauptabschnitt (35) befinden.

3. Reifen (1) für den Winter nach Anspruch 1 oder 2,
wobei die dreieckigen Blöcke (30) auf einem Reifenäquator (C) vorgesehen sind.

4. Reifen (1) für den Winter nach einem der Ansprüche 1 bis 3,
wobei der Innenwinkel (θ1) des ersten Scheitels (31) 20 bis 40 Grad beträgt.

5. Reifen (1) für den Winter nach einem der Ansprüche 1 bis 4,
wobei der Laufflächenabschnitt (2) mit Rillen (51) benachbart zu der ersten Kante (41) versehen ist und die Rillen (51) mit einem Anbindungssteg (54) versehen sind, in welchem sich ein Grund einer Rille (51) erhöht.

6. Reifen (1) nach Anspruch 2,
wobei die verjüngten Abschnitte (36) mit einem Feinschnitt (48) versehen sind.

7. Reifen (1) für den Winter nach einem der Ansprüche 1 bis 6,
wobei die Bodenkontaktflächen (39) der dreieckigen Blöcke (30) einen zweiten Scheitel (32) mit einem größten Innenwinkel (θ2) aufweisen und der Innenwinkel (θ2) des zweiten Scheitels (32) ein stumpfer Winkel ist.

## Revendications

1. Pneumatique (1) d'hiver comprenant :
une portion formant bande de roulement (2) dotée de broches de clous ou de trous (8) pour une broche de clou, la portion formant bande de roulement (2) étant séparée en une pluralité de blocs (20),
**caractérisé en ce que**
la pluralité de blocs (20) comprend des blocs triangulaires (30) ayant une surface de contact au sol sensiblement triangulaire (39) ;
la surface de contact au sol (39) des blocs triangulaires (30) comprenant un premier sommet (31) ayant un angle intérieur le plus petit (θ1) et un premier bord (41) faisant face au premier sommet (31) ; et
le centre (9) des broches de clous des trous (8) étant situé sur le côté du premier bord (41) du bloc triangulaire (30).

2. Pneumatique (1) d'hiver selon la revendication 1,
dans lequel les surfaces de contact au sol (39) des blocs triangulaires (30) comprennent
une portion principale (35) définie entre le premier bord (41) et une ligne médiane imaginaire (38) qui s'étend en parallèle au premier bord (41) et qui divise une longueur (Lh) entre le premier bord (41) et le premier sommet (31) en parts égales, dans lequel la longueur (Lh) est mesurée dans une direction perpendiculaire au premier bord (41), et
une portion effilée (36) entre la ligne médiane imaginaire (38) et le premier sommet (31), et
le centre (9) des broches de clous ou des trous (8) est situé sur la portion principale (35).

3. Pneumatique (1) d'hiver selon la revendication 1 ou 2,
dans lequel les blocs triangulaires (30) sont prévus sur un équateur de pneumatique (C).

4. Pneumatique (1) d'hiver selon l'une quelconque des revendications 1 à 3,
dans lequel l'angle intérieur (θ1) du premier sommet (31) est dans une plage allant de 20 à 40 degrés.

5. Pneumatique (1) d'hiver selon l'une quelconque des revendications 1 à 4,
dans lequel la portion formant bande de roulement (2) est dotée de rainures (51) adjacentes au premier bord (41), et les rainures (51) sont dotées d'une barrette de liaison (54) dans laquelle un fond de rainure (51) s'élève.

6. Pneumatique (1) d'hiver selon la revendication 2,
dans lequel les portions effilées (36) sont dotées d'une fente (48).

7. Pneumatique (1) d'hiver selon l'une quelconque des revendications 1 à 6,
dans lequel les surfaces de contact au sol (39) des blocs triangulaires (30) comprennent un second sommet (32) ayant un angle intérieur le plus grand (θ2), et l'angle intérieur (θ2) du second sommet (32) est un angle obtus.
